Europäisches Patentamt

European Patent Office

Office européen des brevets

(11) Veröffentlichungsnummer : **0 397 047 B1**

# (12) EUROPÄISCHE PATENTSCHRIFT

(45) Veröffentlichungstag der Patentschrift :
**19.07.95 Patentblatt 95/29**

(51) Int. Cl.$^6$ : **H04N 5/92**, H04N 5/765

(21) Anmeldenummer : **90108442.6**

(22) Anmeldetag : **04.05.90**

(54) **Videorecorder mit eingebautem Textdecoder.**

(30) Priorität : **12.05.89 DE 3915621**

(43) Veröffentlichungstag der Anmeldung :
**14.11.90 Patentblatt 90/46**

(45) Bekanntmachung des Hinweises auf die
Patenterteilung :
**19.07.95 Patentblatt 95/29**

(84) Benannte Vertragsstaaten :
**AT BE CH DE DK ES FR GB GR IT LI LU NL SE**

(56) Entgegenhaltungen :
**DE-A- 3 226 382**
**DE-A- 3 533 707**
**DE-C- 3 315 687**
**US-A- 4 023 200**
**US-A- 4 233 628**
**US-A- 4 595 952**

(73) Patentinhaber : **DEUTSCHE
THOMSON-BRANDT GMBH
Hermann-Schwer-Strasse 3
D-78048 Villingen-Schwenningen (DE)**

(72) Erfinder : **Hille, Hans-Dieter, Ing.
Gruenbergerstrasse 1
D-7730 VS-Villingen (DE)**
Erfinder : **Sowig, Helmut, Ing.
Sebastian Kneipp Strasse 14
D-7730 VS-Villingen (DE)**

(74) Vertreter : **Einsel, Robert, Dipl.-Ing.
Deutsche Thomson-Brandt GmbH
Patent- und Lizenzabteilung
Göttinger Chaussee 76
D-30453 Hannover (DE)**

## Beschreibung

Die Erfindung geht aus von einem Videorecorder gemäß dem Oberbegriff des Anspruchs 1. Ein derartiger Videorecorder ist bekannt durch die DE-A-35 33 707.

Für die Aufzeichnung eines Videotext-Signals mit einem Videorecorder ist es auch bekannt (DE-C-33 15 687), das in einem Videotext-Decoder gewonnene analoge Textsignal, z.B. in Form der R,G,B-Signale, als Frequenzmodulation des Bildträgers aufzuzeichnen. Da dabei immer nur ein analoges Signal aufgezeichnet wird, ist auch nur eine Schwarz/Weiß-Wiedergabe möglich.

Der Erfindung liegt die Aufgabe zugrunde, einen Videorecorder mit Aufzeichnung eines Videotextsignals so weiterzubilden, daß trotz der Aufzeichnung nur eines analogen Signals eine Wiedergabe in mehreren Graustufen und auch in den Farben des ursprünglichen Videotext-Signals möglich ist.

Diese Aufgabe wird durch die im Anspruch 1 angegebene Erfindung gelöst.

Bei der Erfindung erfolgt als nicht eine Aufzeichnung der drei R,G,B-Signale mit voller Amplitude über eine ODER-Schaltung. Vielmehr wird aus den R,G,B-Signalen in einer als linearer Addierer wirkenden Matrix ein Graustufensignal nach der der Norm entsprechenden Matrixierungsvorschrift

$$Y = 0,59G + 0,30R + 0,11B$$

erzeugt. Dieses ein Leuchtdichtesignal darstellende Graustufensignal wird dann als Frequenzmodulation des Bildträgers aufgezeichnet. Es kann vorteilhaft sein, zur Verbesserung der Lesbarkeit der Schrift bei der Wiedergabe die genannte Matrixierung etwas abweichend von der Normvorschrift durchzuführen.

Das aufgezeichnete Graustufensignal, das ein Textsignal oder ein Graphiksignal darstellt, kann sich z.B. über eine Vielzahl von Zeilen während des Bildes erstrecken und ein oder mehrere Schriftzeilen darstellen. Das Graustufensignal kann sich auch jeweils nur über einen Teil der Zeilen erstrecken, wenn die Textzeilen nicht vom linken zum rechten Bildrand reichen sollen. Das Graustufensignal kann sich auch über das ganze Bild erstrecken. Dann wird über die ganze Bildfläche lediglich eine Textwiedergabe durchgeführt, auch als "full-page"Text-Wiedergabe bezeichnet. Bei der Textaufzeichnung wird das Textsignal in das das eigentliche bewegte Bild darstellende Signal "eingestanzt", indem das eigentliche Bildsignal durch das Textsignal ersetzt, das eigentliche Bildsignal also unterdrückt wird. Wenn sich die Text- oder Graphik-Wiedergabe über die gesamte Bildfläche erstreckt, also beim sogenannten "full-page-Betrieb", wird das gesamte das Bild darstellende Signal durch das Textsignal ersetzt. Bei der Wiedergabe ist daher durch das Graustufensignal eine Darstellung der Schrift in mehreren Graustufen möglich, so daß gegenüber der reinen Schwarz/Weiß-Darstellung der Schrift eine Verbesserung der Lesbarkeit und der Unterscheidung erzielt werden.

Gemäß der Erfindung kann trotz der Aufzeichnung nur eines Graustufensignals eine Wiedergabe in den ursprünglichen Farben des Videotext-Signals erreicht werden. Dabei werden die folgenden Tatsachen und Erkenntnisse ausgenutzt. Die Amplitude der R,G,B-Textsignale ist entweder null oder gleich dem Maximalwert entsprechend der vollen Farbsättigung. Diese Signale haben also keine Amplitudenzwischenwerte mit verringerter Farbsättigung. Das entsprechend der genannten Vorschrift erzeugte Graustufensignal hat dann eine Amplitude, die von der jeweiligen Zusammensetzung aus den Signalen R, G, B abhängig ist. Die sich ergebende Amplitude für das Graustufensignal ist dabei für alle acht denkbaren Kombinationen aus R,G,B einschließlich Schwarz und Weiß unterschiedlich. Diese Tatsache kann daher ausgenutzt werden, um aus der jeweiligen Amplitude des aufgezeichneten Graustufensignales wieder auf die Kombination aus R,G,B rückzuschließen und die ursprünglichen Signale R,G,B des Videotext-Signals zurückzugewinnen. Es ist dann trotz der Aufzeichnung nur eines Leuchtdichtesignals in überraschender Weise eine Farbwiedergabe möglich, und zwar exakt in der Farbe des ursprünglichen Videotext-Signals. Aus den gewonnenen Signalen R,G,B bei der Wiedergabe kann dementsprechend auch ein FBAS-Signal erzeugt werden.

Der Aufwand für die erfindungsgemäße Lösung ist außerordentlich gering, da im wesentlichen nur eine einfache Matrix erforderlich ist, in der die Signale R,G,B über unterschiedlich bemessene Widerstände mit den entsprechenden Gewichtungsfaktoren addiert werden. Bei der eigentlichen Aufzeichnung ergibt sich kein Mehraufwand, da lediglich nur ein Leuchtdichtesignal in Form des genannten Graustufensignals aufgezeichnet wird.

Die Erfindung ist grundsätzlich für jede Art der Textübertragung anwendbar, also z.B. für Videotext, Antiope und sonstige bekannte oder künftige Systeme zur zusätzlichen Übertragung eines Signals, das einen Text oder eine Graphik darstellt. Die Textsignale können eine Schrift, eine Graphik oder sonstige Zeichensymbole darstellen.

Die Erfindung wird anhand der Zeichnung erläutert. Darin zeigen

Fig. 1 ein vereinfachtes Blockschaltbild des Videorecorders mit Aufzeichnung von Videotext,
Fig. 2 eine Abwandlung der Schaltung nach Fig. 1,
Fig. 3 den Amplitudenverlauf der R,G,B-Signale,
Fig. 4 den Zusammenhang zwischen der jeweiligen Farbe des Videotextsignals und der Amplitude des auf-

EP 0 397 047 B1

gezeichneten Graustufensignals und

Fig. 5 ein Blockschaltbild für die Signalverarbeitung bei der Wiedergabe.

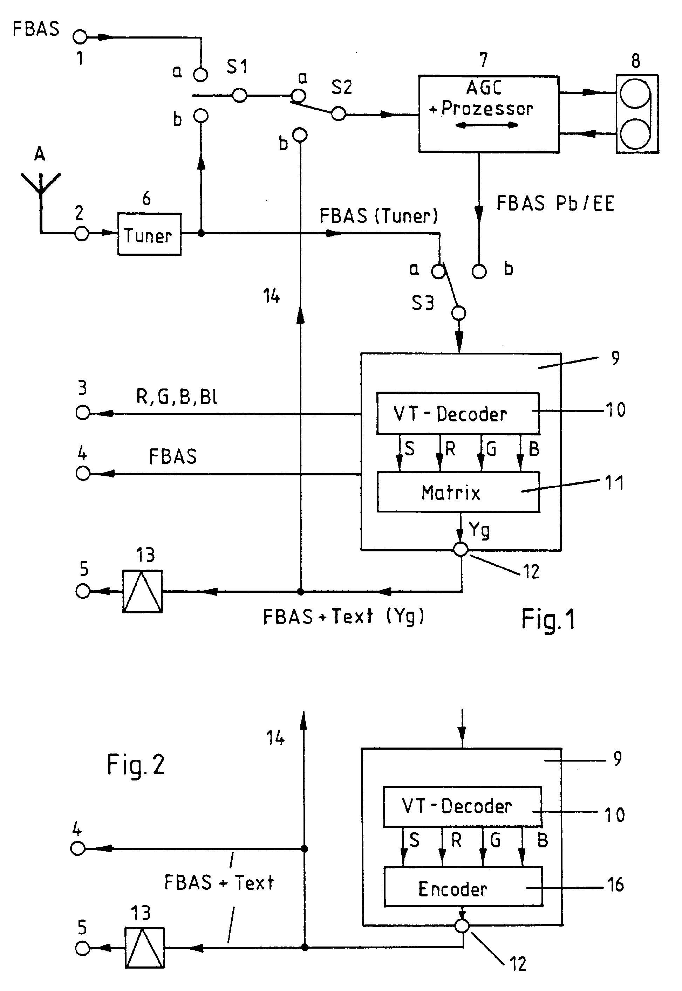

In Fig. 1 enthält der Videorecorder eine Eingangsklemme 1 für ein FBAS-Signal, eine Eingangsklemme 2 für ein Antennensignal, einen Ausgang 3 für ein R,G,B-Signal mit einem Eintastsignal BL, einen Ausgang 4 für ein FBAS-Signal und einen Ausgang 5 für einen mit den Signalen modulierten Träger, im Kanal 36, zum Anschluß eines Fernsehempfängers. Dargestellt sind die Antenne A, der Tuner 6, drei Schalter S1, S2, S3, einen eine automatische Verstärkungsregelung beinhaltenden Signalprozessor 7 für die Verarbeitung des Leuchtdichtesignals, bei Aufnahme und Wiedergabe, die eigentliche Aufzeichnungseinheit 8 sowie eine Signalverarbeitungsschaltung 9. Die Schaltung 9 enthält einen Videotext-Decoder 10 sowie eine als linearer Addierer wirkende Matrix 11. Der Ausgang 12 der Schaltung 9 ist mit dem Eingang des Modulators 13 verbunden, der an dem Ausgang 5 einen mit den Signalen modulierten Träger im Kanal 36 liefert.

Mit der Schaltung gemäß Fig. 1 sind durch entsprechende Steuerung der Schalter S1, S2, S3 folgende Funktionen möglich. Dem Eingang 1 kann ein FBAS-Signal zugeführt werden, das über dem Prozessor 7 aufgezeichnet wird. Dem Eingang 2 wird das Signal einer Antenne 6 zugeführt und in dem Tuner 6 in ein FBAS-Signal umgewandelt. Dieses FBAS-Signal gelangt für eine Aufzeichnung über die Schalter S1, S2 in der Stellung b auf dem Prozessor 7 und gleichzeitig oder alternativ über dem Schalter S3 in der Stellung a auf die Schaltung 9. Am Ausgang 3 kann ein R,G,B-Signal abgenommen werden. Dieses kann aus dem FBAS-Signal vom Tuner 6 abgeleitet sein im sogenannten EE (Elektrik/Elektrik)-Betrieb. Es kann auch im Wiedergabebetrieb über den Schalter S3 in der Stellung b von dem Prozessor 7 kommen. Das Signal am Ausgang 3 kann zusätzlich ein Textsignal enthalten, das von dem Tuner 6 oder auch von dem Prozessor 7 bei der Wiedergabe kommen kann. Am Ausgang 4 kann ein FBAS-Signal abgenommen werden, das entweder vom Tuner 6 oder bei Wiedergabebetrieb vom Prozessor 7 kommt. Dieses Signal enthält kein Videotextsignal. Am Ausgang 5 kann ein modulierter Träger im Kanal 36 abgenommen werden, der mit dem FBAS-Signal und zusätzlich mit einem Videotextsignal moduliert ist. Am Ausgang 12 der Schaltung 9 steht an sich das gleiche FBAS-Signal wie am Ausgang 4, jedoch gegebenenfalls kombiniert mit einem Videotextsignal. Das FBAS-Signal am Ausgang 12 kann ebenfalls vom Tuner 6 oder bei Wiedergabebetrieb vom Prozessor 7 stammen. Das Videotextsignal innerhalb des FBAS-Signals am Ausgang 12 erscheint stets auch entsprechend im R,G,B-Signal am Ausgang 3.

Die Aufzeichnung eines mit der Antenne A empfangenen Videotext-Signals erfolgt mit der Schaltung gemäß Fig. 1 auf folgende Weise: Das Signal gelangt von der Antenne A über den Eingang 2 auf den Tuner 6. Dieser erzeugt das FBAS-Signal, das während der vertikalen Austastlücke jeweils in mehreren Zeilen das Videotext-Signal enthält. Dieses Signal gelangt über den Schalter S3 in der Stellung a auf den Eingang der Schaltung 9 und dort auf den Eingang des Videotext-Decoders 10. Der Decoder 10 erzeugt jeweils in den Zeilen mit Textwiedergabe die analogen Textsignal R,G,B und ein Synchronsignal S. Diese Signale gelangen auf die Matrix 11 und werden dort entsprechend der Matrixierungsvorschrift

$$Y = 0,59G + 0,30R + 0,11B$$

zu einem Graustufensignal Yg matrixiert. Dieses Graustufensignal gelangt zusammen mit dem das eigentliche bewegte Bild darstellenden FBAS-Signal auf den Ausgang 12 und von dort an den Eingang des Modulators 13. Der Eingang des Modulators 13, der eigentlich einen Ausgang des Recorders darstellt, ist über die Leitung 14 mit dem Schalter S2 verbunden. Dadurch wird erreicht, daß das Signal vom Eingang des Modulators 13 über den Schalter S2 in der Stellung b auf den Eingang der in Aufnahmebetrieb geschalteten Schaltung 7 gelangt und somit auf dem Aufzeichnungsteil 8 aufgezeichnet wird. Das praktisch am Ausgang des Recorders vorhandene Graustufen-Signal Yg wird also von einer Ausgangsklemme, z.B. der Klemme einer Scart-Buchse, wieder zurückgeführt und dem Aufnahmeweg des Recorder zwecks Aufnahme zugeleitet. Dort wird somit ein kombiniertes Signal aufgezeichnet, das an sich das Signal des bewegten Fernsehbildes, jedoch während der Bildbereiche mit Textwiedergabe das Textsignal darstellt. Das Signal kann auch lediglich das Textsignal darstellen, wenn im Sinne von "full page" über die ganze Bildfläche nur Textwiedergabe erfolgt.

Fig. 2 zeigt eine Abwandlung des unteren Teils der Schaltung nach Fig. 1. Die Schaltung 9 enthält statt der Matrix 11 den vollständigen FBAS-Encoder 16. Am Ausgang 12 steht somit ein FBAS-Signal, in das das Textsignal als FBAS-Signal eingefügt ist. Dieses Signal gelangt gleichermaßen auf den Eingang des Modulators 13 und auf den Ausgang 4. Die Ausgänge 4, 5 liefern somit an sich das selbe Signal, wobei lediglich das Signal am Ausgang 5 einem Träger aufmoduliert ist. Die übrige Schaltung ist gegenüber Fig. 1 unverändert.

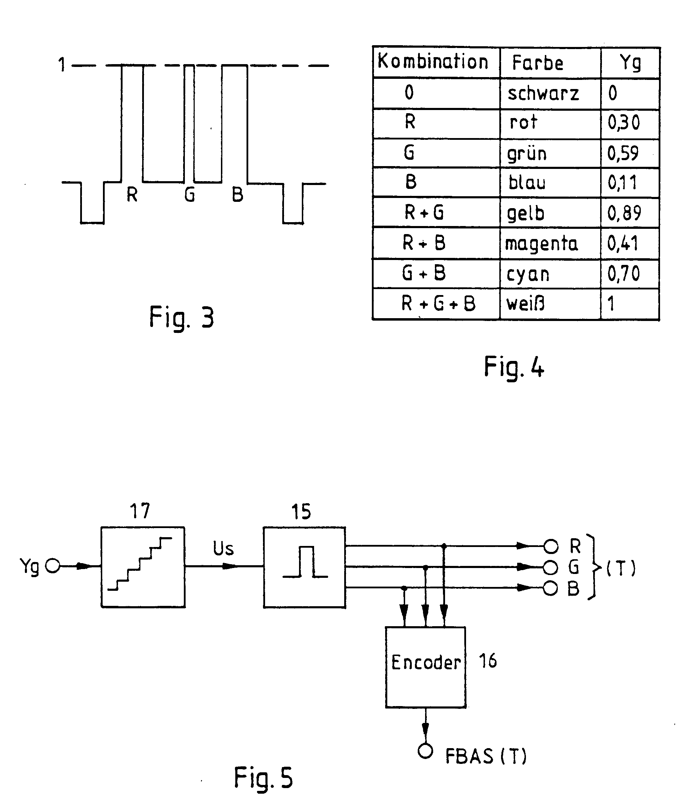

Fig. 3 zeigt den Amplitudenverlauf der Signale R,G,B des Videotext-Signals, die in beliebiger Kombination auftreten können. Die Amplitude der Signale R,G,B ist entweder null, entspricht also dem Schwarzwert, oder gleich dem Maximalwert 1 entsprechend der vollen Farbsättigung. Zwischenwerte in der Amplitude gibt es in den R,G,B-Signalen nicht.

Fig. 4 zeigt die insgesamt acht denkbaren Kombinationen aus den Signalen R,G,B im Videotext-Signal einschließlich der beiden Werte Schwarz und Weiß und die zugehörige Farbe entsprechend der Kombination

3

aus R, G, B. Es ist ersichtlich, daß die Amplitude des entsprechend der Matrixierungsvorschrift erzeugten Graustufensignals Yg für diese acht Kombinationen unterschiedlich ist. Es gibt also eine eindeutige Zuordnung der jeweiligen Farbe zu der Amplitude von Yg. Wenn z.B. Yg bezogen auf die Maximalamplitude von 1 den Wert 0,59 hat, so kann diese Amplitude nur aus dem Textsignal G allein stammen. Entsprechend der Zuordnung gemäß Fig. 4 ist es daher möglich, aus der Amplitude von Yg auf die Kombination aus R,G,B rückzuschließen. Das bedeutet, daß durch Auswertung der Amplitude von Yg wieder die Farbsignale R, G, B jeweils mit der Amplitude 0 oder 1 zurückgewonnen werden können und somit eine Wiedergabe in den ursprünglichen Farben des Videotext-Signals möglich ist.

Fig. 5 zeigt eine Schaltung für die Wiedergabe, die aufgrund der Zusammenhänge gemäß Fig. 3 arbeitet. Das vom Band abgetastete Graustufensignal Yg wird dem Amplitudendiskriminator 17 zugeführt, der eine Unterscheidung der Amplitudenstufen von Yg gemäß Fig. 3 durchführt. Entsprechend dieser Amplitudenauswertung gelangt ein Signal Us auf den Generator 15. Der Generator 15 erzeugt aufgrund des eindeutigen Zusammenhanges zwischen der Kombination der R,G,B und der Amplitude von Yg wieder die das Videotext-Signal darstellenden Signals R,G,B jeweils mit der Amplitude 0 oder der vollen Amplitude 1. Diese Signale R,G,B können somit für die farbige Darstellung des Videotextsignals auf einer Bildröhre benutzt werden. Alternativ oder additiv können diese Signale dem Encoder 16 zugeführt werden, der ein das jeweilige Videotext-Signal darstellendes FBAS-Signal erzeugt. Dieses Signal kann dann während des Vorhandenseins von Text in das das eigentliche bewegte Bild darstellende FBAS-Signal eingefügt werden und bei der Wiedergabe in einem Fernsehempfänger die entsprechende Textwiedergabe bewirken. Der in dem Encoder 16 erzeugte quadraturmodulierte Farbträger kann in seiner Frequenz mit der Zeilenfrequenz des aufgezeichneten Signals verkoppelt sein oder auch unabhängig davon auf einer festen Frequenz liegen.

Mit dem erfindungsgemäßen Recorder ist auch die Aufzeichnung von Titelseiten möglich, die der Kunde selbst mittels eines Zeichengenerators erstellt hat. Auf diese Weise können z.B. Titelseiten oder sonstige Ergänzungen zu einer Videoaufnahme auf dem Recorder aufgezeichnet werden.

**Patentansprüche**

1. Videorecorder mit eingebautem Textdecoder (10), wobei an den Ausgängen des Textdedecoders analoge, eine Schrift oder Graphik darstellende Textsignale R,G,B stehen, deren Amplitude entweder gleich null oder gleich 100 % der vollen Farbsättigung ist, **dadurch gekennzeichnet,** daß im Aufnahmeweg eine mit den R,G,B-Textsignalen gespeiste Matrix (11) liegt, die eine Matrixierung nach der Gleichung

$$Y = 0,59G + 0,30R + 0,11B$$

entsprechend der PAL-Norm bewirkt, und daß das dadurch gewonnene Grauwertsignal (Yg) über einen Schalter (S2) an den Aufzeichnungsweg (14) angelegt ist, und daß bei der Wiedergabe das Grauwertsignal (Yg) einer Schaltung (17, 15) zugeführt ist, in der aus der eindeutigen Zuordnung zwischen der Zusammensetzung des jeweiligen Farbsignals aus den Textsignalen R,G,B und der Amplitude des Grauwertsignals (Yg) die Textsignale R,G,B zurückgewonnen werden.

**Claims**

1. A video recorder with a built in text decoder (10), where analogue text signals (R, G, B), which represent text or graphics and the amplitude of which is either equal to zero or equal to 100% of the full colour saturation, occur at the outputs of the text decoder, characterised in that a matrix (11) fed with the R, G, B-text signals is located in the recording path, which matrix (11) effects a matrixing according to the equation

$$Y = 0.59G + 0.30R + 0.11B$$

in accordance with the PAL standard, and that the grey scale signal (Yg) thus obtained is applied via a switch (S2) to the recording path (14), and that on playback the grey scale signal (Yg) is fed to a circuit (17, 15) in which the text signals R, G, B are recovered from the clearly defined coordination between the composition of the respective colour signal from the text signals R, G, B and the amplitude of the grey scale signal (Yg).

**Revendications**

1. Magnétoscope avec décodeur de textes (10) intégré, les signaux textes R, G, B analogiques, représentant une écriture ou un graphisme, étant situés aux sorties du décodeur de textes, et l'amplitude de ces signaux de textes étant soit 0, soit 100 % de la saturation complète de couleurs, caractérisé en ce qu'une matrice (11) alimentée par les signaux de textes R, G, B est située sur le parcours d'enregistrement, que cette matrice permet un matriçage selon l'équation

$$Y = 0,59\,G + 0,30\,R + 0,11\,B$$

conformément à la norme PAL, que le signal de niveaux de gris (Yg) ainsi obtenu est appliqué sur le parcours d'enregistrement (14) par un commutateur (S 2) et que le signal de gris (Yg) est amené à un circuit (17,15) lors de la reproduction dans lequel les signaux de textes R, G, B sont récupérés grâce à l'affectation sans équivoque entre la composition du signal de couleur respectif à partir des signaux de textes R, G, B et l'amplitude du signal de niveaux de gris (Yg).

FBAS

1

a  S1  a  S2

b  b

A

2  6  FBAS (Tuner)

Tuner

7

AGC +Prozessor

8

FBAS Pb/EE

a  b

S3

14

9

3  R,G,B,Bl

VT-Decoder  10

S  R  G  B

4  FBAS

Matrix  11

Yg

12

5  13

FBAS+Text (Yg)

Fig.1

14

Fig. 2

4

FBAS + Text

5  13

9

VT-Decoder  10

S  R  G  B

Encoder  16

12

Fig. 3

| Kombination | Farbe | Yg |
|-------------|---------|------|
| 0 | schwarz | 0 |
| R | rot | 0,30 |
| G | grün | 0,59 |
| B | blau | 0,11 |
| R + G | gelb | 0,89 |
| R + B | magenta | 0,41 |
| G + B | cyan | 0,70 |
| R + G + B | weiß | 1 |

Fig. 4

Fig. 5